# EUROPEAN PATENT SPECIFICATION

(11) **EP 2 522 626 B1**
(45) Date of publication and mention of the grant of the patent: **20.07.2016**
(21) Application number: 11165848.0
(22) Date of filing: 12.05.2011
(51) Int. Cl.: C01B 33/146, C01B 33/148, C01B 33/149, D21H 17/68, D21H 21/10

(54) **Method of producing silica-based sol, silica-based sol and its use**
Verfahren zur Herstellung von Sol auf Silicabasis, Sol auf Silicabasis und Verwendung davon
Procédé de production de sol à base de silice, sol à base de silice et son utilisation

(43) Date of publication of application: 14.11.2012
(73) Proprietor: Kemira Oyj, 00180 Helsinki (FI)
(72) Inventor: Hauschel, Bernd, 51467 Bergisch Gladbach (DE); Andres, Stefan, 50765 Köln (DE)
(74) Representative: Turun Patenttitoimisto Oy

(56) References cited:
- EP-A1- 1 181 245
- DE-A1- 19 856 729
- DE-A1-102005 052 202
- US-A- 3 867 279

## Description

The invention relates to a method of producing silica-based sol, silica-based sol and its uses according to the preambles of the independent claims presented hereafter.

### TECHNICAL FIELD

Drainage and retention aids are used in papermaking to improve the drainage of water from the wet paper web and to increase the adsorption of fine material onto the fibres in the web. Silica-based particles are generally used as drainage and retention aid in papermaking together with charged organic polymers, cationic and amphoteric starches.

Silica-based particles are usually employed in papermaking in form of aqueous colloidal dispersions, i.e. sols. For example, EP 1181245 and WO 01/46072 disclose aqueous silica-based sols, which are suitable for use as a retention and drainage aids. Preferably the aqueous sols comprise silica-based particles having a high specific surface area, which improves their efficiency. However, the high surface area of the silica-based particles may decrease the long-term stability of the sol.

There is constant need to improve the efficiency of the silica-based sols that are used in papermaking. At the same time the production of the silica-based sols should be as simple and economically advantageous as possible, and the obtained sol should be stable over prolonged storage time.

Different methods for modifying or treating silica-based materials are disclosed in DE 19856729 A1, US 3,867,279 and DE 102005052202 A1.

### OBJECT OF THE INVENTION

An object of this invention is to minimise or even eliminate the disadvantages existing in the prior art.

An object is also to provide a method with which a stable silica-based sol with good efficiency can be produced simply and economically.

These objects are attained with the present invention having the characteristics presented below in the characterising parts of the independent claims.

### DETAILED DESCRIPTION OF THE INVENTION

The method according to the present invention for producing a silica-based sol is defined in claim 1. The method comprises
- obtaining silica-based sol comprising silica particles, which sol has a specific surface area of less than 115 m²/g aqueous sol, and
- introducing phosphate groups on the surface of the silica particles by reacting the silica-based sol with a modifier under mixing, at reaction temperature 15 - 35 °C, whereby the modifier is used in amount of 0.4 - 3 weight-%, calculated to amount of silica SiO₂ in the sol, and the modifier is selected from the group comprising metaphosphoric acid, polyphosphoric acid, phosphoroxyhalogenides, a mixture of metaphosphoric acid (HPO₃)ₙ and alkali metaphosphate, (MPO₃)ₙ, or a mixture of metaphosphoric acid and polyphosphoric acid, or an alkali salt of polyphosphoric acid.

The silica-based sol according to the present invention is defined in claim 5. The sol is produced by using the method of the invention, and it has a specific surface area of less than 115 m²/g aqueous sol. Further it comprises silica particles, which have an average particle size below 50 nm, the SiO₂ content of the silica based sol being at least 5 weight-% and phosphorous content at least 0.0055 weight-%.

Typically the silica-based sol according to the present invention is used as drainage and retention aid in papermaking industry.

Now it has been surprisingly found out that by introducing phosphate groups on the surface of the silica-based particles, the efficiency of the obtained sol is clearly improved, while acceptable storage stability is still achieved. It is speculated, without wishing to be bound by the theory, that the phosphate groups provide a functional effect which corresponds to the effect which is obtained by increasing the surface area of the silica-based particles. In the present invention the surface area is, however, not increased, which improves the stability of the sol. Thus, by using present invention it is possible to produce a silica-based sol showing a good effectivity as retention and drainage aid and simultaneously a satisfactory long-term stability.

In this application the term silica-based sol means an aqueous sol, which contains anionic silica-based particles, which are based on SiO₂ or silicic acid. The term encompasses colloidal silica, polysilicate microgels, colloidal borosilicates, polyaluminosilicate microgels and their mixtures. The term silica-based sol encompasses also aqueous sols, where the silica-based particles are particles of different types of polysilicic acid, aluminium modified silica, aluminium silicates or their mixtures. According to one preferable embodiment of the invention the silica-based sol, which is modified with phosphate groups, consists substantially of silica particles, SiO₂. The average particle size of the silica-based particles is less than 50 nm, preferably less than 20 nm, more preferably in the range of 0.5 - 10 nm. The particle size is determined by using transmission electron microscopy, TEM, and normal measuring methods associated with it. These are known for a person skilled in the art. The particle size refers, as conventional in silica chemistry, to the average size of the primary particles, which may be aggregated or non-aggregated.

According to one embodiment of the invention the phosphorous content of the silica based sol may be at least 0.0083 weight-%, more preferably at least 0.011 weight-%.

According to the invention the phosphate groups are introduced to the surface of the silica-based particles in the sol by reacting the silica-based sol with a modifier selected from the group comprising metaphosphoric acid (HPO₃)ₙ, polyphosphoric acid HO(PO₂OH)ₓH, phosphoroxyhalogenides, mixture of metaphosphoric acid (HPO₃)ₙ and alkali metaphosphate, (MPO₃)ₙ or an alkali salt of polyphosphoric acid. Mixtures of metaphosphoric acid and polyphosphoric acid may also be used. Examples of phosphoroxyhalogenides are phosphoroxychloride, POCl₃, and phosphoroxybromide POBr₃. According to one embodiment of the invention the modifier is selected from the group comprising metaphosphoric acid (HPO₃)ₙ, polyphosphoric acid HO(PO₂OH)ₓH, mixture of metaphosphoric acid (HPO₃)ₙ and alkali metaphosphate, (MPO₃)ₙ or an alkali salt of polyphosphoric acid. Preferably, it is provided that the modifier is not orthophosphoric acid H₃PO₄. The storage stability of obtained silica-based sol is especially good when metaphosphoric acid or polyphosphoric acid is used as modifier.

In this context metaphosphoric acid comprises compounds, which are cyclic condensation products of orthophosphoric acid. Metaphosphoric acid has a general formula (HPO₃)ₙ. Typical compounds are present as 6-membered or 8-membered rings with n = 3 or n = 4. Metaphosphoric acid may be used as pure acid, or as a mixture of metaphosphoric acid (HPO₃)ₙ and alkali metaphosphate, (MPO₃)ₙ. Alkali metaphosphate is typically sodium metaphosphate (NaPO₃)ₙ. The weight ratio between metaphosphoric acid and alkali metaphosphate may vary within a broad range, typically from about 1:4 to 4:1.

In this context polyphosphoric acid comprises compounds, which are linear condensation products of orthophosphoric acid. Polyphosphoric acid has a general formula HO(PO₂OH)ₓH, where x is preferably in the range from 2 to 25, more preferably from 2 to 15. Alkali salts of polyphosphoric acid, in which hydrogen atoms are partially or fully replaced by alkali metal ions, are also suitable for use in the present invention. Polyphosphoric acid is, however, preferred.

The modifier is added to the obtained silica-based sol under mixing and the reaction is allowed to proceed. The modifier is added in amount of 0.4 - 3 weight-%, preferably 0.6 - 2.5 weight-%, calculated to amount of silica SiO₂ in the sol. The modifier is typically used in concentrated form and it typically has a purity of > 90 weight-%. The reaction temperature is 15 - 35 °C. Reaction time is typically 1 - 60 minutes, preferably 5 - 45 minutes, under which reaction time the reaction proceeds to completion or to a required reaction level. After the reaction period, the reaction mixture is typically allowed to stand for 12 - 24 hours before any further processing steps. It is assumed that the phosphate groups are chemically bound to the surface of the silica-based particles in the sol, leading to an improved efficiency when used as retention and/or drainage aid. One possible, assumed mechanism for the formation of these surface-bound phosphate groups is the reaction of the silanolate groups on the silica sol particles with the phosphoroxyhalogenide, the metaphosphoric acid/metaphosphate or the polyphosphoric acid/polyphosphate.

The addition of the modifier may be accompanied by addition of a base, which may be added simultaneously or shortly after the addition of the modifier. The base is typically added in amount such that a pH value in the range of 9.5 - 11.5 is obtained after the introduction of phosphate groups on the surface of the silica particles, i.e. after the reaction of the modifier with the silica-based sol. The base is preferably selected from alkali hydroxides or their mixtures. One preferred base is sodium hydroxide.

The silica-based sol which is used as starting material for the introduction of phosphate groups may be a dilute or concentrated solution. The silica-based sol may be obtained from a concentration step, such as an ultrafiltration step, in which the solids content of the sol is increased > 10 weight-%. On the other hand, it is also possible to use a raw solution of silica-based sol before the concentration, whereby the solids content of the sol is < 6 weight-%. According to one embodiment of the invention, a raw solution of silica-based sol having solids content < 6 weight-% is modified by introducing phosphate groups on the surface of the silica particles, after which the silica-based sol is subjected to a concentration step, such as ultrafiltration, in order to increase the solids content of the sol to > 10 weight %. Concentration is preferably performed by using ultrafiltration. Ultrafiltration reduces also the overall salt content in the silica sol, which has a positive effect on the storage stability of the silica-based sol.

According to one embodiment of the invention the weight ratio of SiO₂/phosphorous in the sol is 80:1 - 900:1, preferably 95:1 - 600:1, more preferably 120:1 - 450:1.

The SiO₂ content of the modified silica-based sol is preferably in the range of 8 - 25 weight-%, more preferably in the range of 10 - 18 weight-%, even more preferably in the range of 12 - 16 weight-%. The modified silica-based sol has solids content preferably in the range of 8.5 - 26 weight-%, more preferably in the range of 10.5 - 19 weight-%, even more preferably in the range of 12.5 - 17 weight-%. The solids content may be determined by drying the silica sol at 180 °C for 30 minutes, e.g. in an oven and measuring the weight difference before and after drying. The solids content may be determined also by using a suitable moisture analyzer, e.g. a halogen moisture analyzer. Solids in an unmodified silica sol are present as a mixture of SiO₂ and Na₂O, whereas solids in a modified silica sol are present as a mixture of SiO₂, Na₂O and P₂O₅. For calculation of the SiO₂ content of given silica sol, the sodium and phosphorous content of the sol may be determined by known methods of elemental analysis and the calculated amounts of Na₂O and P₂O₅ may then be detracted from the measured total solids content.

According to the invention the silica-based sol, which may be used as starting material for the introduction of phosphate groups, has a specific surface area of less than 115 m²/g aqueous sol, preferably less than 105 m²/g aqueous sol. When expressed as in square metres per gram of aqueous sol, the specific surface area is a calculated value and represents the specific surface area that is available per gram of aqueous silica-based sol. The specific surface area is calculated by multiplying the specific surface of the silica with the dry solids value of the aqueous silica-based sol. The silica-based particles have typically a specific surface area in the range from 400 to 800 m²/g, preferably in the range from 450 to 750 m²/g, measured by using method described by Sears in Analytical Chemistry 28(1956):12, 1981 - 1983.

According to one embodiment of the present invention the silica-based sol has an S-value within the range from 30 to 70 %, preferably within the range from 35 to 65 %, more preferably within the range from 40 to 60 %, determined by using method described by Iler & Dalton in J. Phys. Chem. 60(1956), 955 - 957. The S-value may be used to indicate the degree of aggregate or microgel formation, whereby a low S-value indicates a higher degree of aggregation.

The silica-based sol may have a pH value within the range from 9 to 11.5, preferably within the range from 9.5 to 11, more preferably within the range from 9.7 to 10.7. In case the pH value of the silica-based sol is too low after introduction of phosphate groups on the surface of the silica-based particles, it is possible to adjust the pH of the silica-based sol to a desired level by addition of suitable base, preferably an alkali hydroxide, such as NaOH.

The dynamic viscosity of the silica-based sol is typically in the range of 2 - 5 mPas (at 25 °C), measured by conventional methods and instruments used for measuring dynamic viscosity, such as instruments from Brookfield or Haake. A typical instrument that may be used for measuring the dynamic viscosity of the silica-based sol is Haake Viscotester VT 5L, equipped with the LCP spindle, the temperature being adjusted to 25 °C and the rotational speed being 100 rpm.

When used as drainage or retention aid in the papermaking process the silica-based sol according to the present invention is typically used in amount of at least 0.2 - 6 kg/(ton dry furnish). According to one preferred embodiment of the invention concentrated, e.g. ultrafiltered, silica sol having SiO₂ content of 10 - 18 weight-% is used in papermaking applications, as drainage or retention aid. According to one embodiment, concentrated phosphate-modified silica sol is diluted with at least one part of water prior the addition to the papermaking furnish. The present invention enables generally the use of lower amounts of silica-based sol as drainage or retention aid, due to it higher efficiency.

### EXPERIMENTAL

The invention is further described in the following examples, which should not be considered limiting the same.

### Preparation of silica sol starting materials

Silica sols, which are used as starting materials for examples 1 and 2, are prepared as follows:

### Silica sol starting material for Example 1

A 4 litre flask with a flat bottom, equipped with a porous glass filter in the bottom outlet, a stirrer and a pH probe is used as reactor. The reaction is performed without external cooling or heating at ambient temperature. 2000 ml of a strongly acidic ion exchange resin (Lewatit MonoPlus S 100H, from Lanxess) is placed in the reactor and 800 ml of deionised water is then added, so that the ion exchange resin beads are covered with water. The stirrer is switched on, so that the slurry of beads is stirred with 200 rpm. A solution of 550.7 g concentrated sodium silicate in 1574.5 g deionised water is added to the bead slurry over 10 minutes under continuous stirring. The concentrated sodium silicate has a solids content of 39.84%, a SiO₂ content of 30.70% and a Na₂O content of 9.14%. After addition of the sodium silicate, the pH value in the slurry is 2.9. The stirring is continued for 15 minutes, after which the formed polysilicic acid is pumped out through the bottom outlet of the reactor. 2733.4 g of concentrated polysilicic acid is obtained, having a dry solids content of 5.50%. The resin beads are then washed with 667 ml deionised water, under stirring for 5 minutes, after which the washing liquid is pumped out of the reactor. 670 ml of diluted polysilicic acid, having a solids content of 1.03%, is obtained (the solids content of the polysilicic acid corresponds to its SiO₂ content).

680 ml of deionised water and 10.0 g of a sodium hydroxide solution, having 50 % strength by weight, are placed and mixed in a glass beaker equipped with a stirrer and a pH probe. Under continued stirring, 1045.3 g of concentrated polysilicic acid is then added. The pH value drops from about 13 to 9.8. After 10 minutes of continuous stirring, 243.4 g of diluted polysilicic acid is furthermore added and stirring is continued for 30 minutes. The pH value reaches 9.7 after this period and starts then slowly to increase. The mixture is allowed to stand overnight at room temperature, whereby the pH value increases to 10.2. The obtained silica sol is then concentrated with a rotary evaporator to a solids content of 13.5 %; yield 428.3 g. The obtained silica sol is used for Example 1.

### Silica sol starting material for Example 2

The silica sol synthesis is repeated in a similar way as above, the concentration step with the rotary evaporator is however continued to a solids content of 15.6%, whereby a silica sol with a lower S value is obtained. The yield is 373.7 g. In order to adjust the solids content to 13.5 %, 58.1 g of deionised water is added and mixed in. The obtained silica sol is used for Example 2.

### Preparation of phosphate-modified silica sols

### Example 1 (modification with polyphosphoric acid):

A silica sol, prepared as described above, and having following properties is taken as starting material:

| | |
|---|---|
| Solids | 13.5% |
| SiO2 content | 12.6% |
| S value | 52% |
| Surface area | 717 m²/g |
| pH | 10.7 |
| Viscosity (25 °C) | 2.86 mPas |

The used polyphosphoric acid used had a phosphorous content of 37 weight-%.

Sample 1: 915 g of silica sol is placed in a glass beaker and stirred by a magnetic stirrer at room temperature. 9.15 g of prediluted solution of 37 % polyphosphoric acid (prediluted to 13.5 % with demineralized water) is slowly added under 10 minutes. Stirring is continued for another 30 minutes. The pH drops slightly during this reaction from 10.7 to 10.6. Phosphorous content is thus 0.457 g (= 9.15 g x 0.135 x 0.37) in total amount of Sample 1 (924.15 g = 915 g + 9.15 g), i.e. 0.0495 weight-%.

Sample 2: 285 g of sample 1 is adjusted to pH 11.5 by addition of 9.7 g aqueous NaOH solution (strength 13.5%). Phosphorous content in Sample 2 is 0.0478 weight-%.

Sample 3: 474 g of sample 1 is further modified with polyphosphoric acid by slow addition of 4.70 g 37 % polyphosphoric acid (prediluted to 13.5 % with demineralized water) under 5 minutes. The pH drops during the addition, so the pH is adjusted to 10.5 after completion of the polyphosphoric acid addition. 0.4 g of aqueous NaOH solution (strength 13.5 %) is consumed during the pH adjustment. Stirring is continued afterwards for 30 minutes. Phosphorous content in Sample 3 is 0.098 weight-%.

Sample 4: 249.4 g of sample 3 are adjusted to pH 11.5 by adding 9.8 g aqueous NaOH solution (strength 13.5 %) Phosphorous content of Sample 4 in 0.0943 weight-%.

All samples are allowed to stand overnight at room temperature before the evaluation of their properties. Results are shown in Table 1.

**Table 1. Properties of phosphate-modified silica sols, samples 1 - 4**

| | pH | Solids (%) | S value (%) | Surface area, measured by Sears titration (m²/g) | Viscosity at 25 °C (mPas) |
|---|---|---|---|---|---|
| Sample 1 | 10.6 | 13.5 | 52 | 724 | 2.86 |
| Sample 2 | 11.5 | 13.5 | 48 | 743 | 2.84 |
| Sample 3 | 10.5 | 13.5 | 48 | 750 | 2.83 |
| Sample 4 | 11.5 | 13.5 | 45 | 761 | 2.78 |

### Example 2 (modification with metaphosphoric acid/sodium metaphosphate)

A silica sol, prepared as described above, and having following properties is taken as starting material:

| | |
|---|---|
| Solids | 13.5% |
| SiO₂ content | 12.6% |
| S value | 43% |
| Surface area | 697 m²/g |
| pH | 10.7 |
| Viscosity (25 °C) | 3.24 mPas |

The used mixture of metaphosphoric acid/sodium metaphosphate has an acid content of 37 % and a sodium salt content of 63 %, the phosphorous content of the mixture being 31.8%.

Sample 5: 830 g of silica sol is placed in a glass beaker and stirred by a magnetic stirrer at room temperature. 8.30 g of prediluted solution (prediluted to 13.5 % with demineralized water) of the mixture of metaphosphoric acid/sodium metaphosphate is slowly added under 10 minutes. Stirring is continued for another 30 minutes. The pH drops from 10.7 to 10.6. Phosphorous content in Sample 5 is 0.0425 weight-%.

Sample 6: 200 g of sample 5 is adjusted to pH 11.5 by adding 7.3 g aqueous NaOH solution (strength 13.5 %). Phosphorous content in Sample 6 is 0.041 weight-%.

Sample 7: 434 g of sample 5 is further modified with the mixture of metaphosphoric acid/sodium metaphosphate by slow addition of 4.34 g prediluted metaphosphoric acid/sodium metaphosphate solution (same as used for the preparation of sample 5) under 5 minutes. The pH drops during this addition, so the pH is adjusted to 10.5 after completion of the metaphosphoric acid/sodium metaphosphate addition. 2.2 g of aqueous NaOH solution (strength 13.5 %) is consumed during the pH adjustment. Stirring is continued afterwards for 30 minutes. Phosphorous content in Sample 7 is 0.0845 weight-%.

Sample 8: 249.4 g of sample 7 is adjusted to pH 11.5 by adding 10.2 g aqueous NaOH solution (strength 13.5 %). Phosphorous content in Sample 8 is 0.088 weight-%.

All samples are allowed to stand overnight at room temperature before the evaluation of their properties. Results are shown in Table 2.

**Table 2. Properties of phosphate-modified silica sols, samples 5 - 8**

| | pH | Solids (%) | S value (%) | Surface area, measured by Sears titration (m²/g) | Viscosity at 25 °C (mPas) |
|---|---|---|---|---|---|
| Sample 5 | 10.6 | 13.5 | 40 | 746 | 3.01 |
| Sample 6 | 11.5 | 13.5 | 35 | 767 | 3.60 |
| Sample 7 | 10.5 | 13.5 | 35 | 754 | 4.04 |
| Sample 8 | 11.5 | 13.5 | 31 | 785 | 4.65 |

### Example 3 (modification with metaphosphoric acid/sodium metaphosphate)

A commercially available ultrafiltrated silica sol (Fennosil 515, Kemira), is taken as starting material. The silica sol has the following properties:

| | |
|---|---|
| Solids | 16.0 % |
| SiO₂ content | 15.4 % |
| S value | 61 % |
| Surface area | 547 m²/g |
| pH | 10.2 |
| Viscosity (25 °C) | 2.6 mPas |

The used mixture of metaphosphoric acid/sodium metaphosphate has an acid content of 37 % and a sodium salt content of 63 %, the phosphorous content of the mixture being 31.8%.

Sample 9: 1000 g silica sol is placed in a glass beaker and stirred by a magnetic stirrer at room temperature. 6.20 g of prediluted solution (prediluted to 15 % with demineralized water) of the mixture of metaphosphoric acid and sodium metaphosphate is slowly added under 10 minutes. Stirring is continued for 30 minutes. The pH drops from 10.2 to 10.1. Phosphorous content in Sample 9 is 0.0294 weight-%.

Sample 10: 1000 g silica sol is placed in a glass beaker and stirred by a magnetic stirrer at room temperature. 24.8 g of prediluted solution (prediluted to 15 % with demineralized water) of the mixture of metaphosphoric acid and sodium metaphosphate is slowly added under 10 minutes. The pH drops during the addition, so pH is adjusted to 10.0 after completion of the addition of metaphosphoric acid/sodium metaphosphate. 7.0 g of aqueous NaOH solution (strength 13.5 %) is consumed during the pH adjustment. Stirring is continued afterwards for 30 minutes. Phosphorous content of Sample 10 is 0.115 weight-%.

The samples are allowed to stand overnight at room temperature before the evaluation of their properties. Results are shown in Table 3.

**Table 3. Properties of phosphate-modified silica sols, samples 9 - 10**

| | pH | Solids (%) | S value (%) | Surface area, measured by Sears titration (m²/g) | Viscosity at 25 °C (m Pas) |
|---|---|---|---|---|---|
| Sample 9 | 10.1 | 16.0 | 60 | 554 | 2.6 |
| Sample 10 | 10.0 | 15.9 | 56 | 572 | 2.9 |

The surface area of all samples 1 -- 10 is determined by Sears titration (Analytical Chemistry 28(1956):12, 1981 - 1983.). The measured higher surface area corresponds with a higher consumption of alkali during the titration. It is assumed that the surface area of the phosphate-modified silica particles does not truly increase, but that the introduced phosphate groups "simulate" an increased surface area through consumption of alkali during the Sears titration.

### Storage stability test of samples 1 -10

Storage stability of the samples 1 - 10 is followed by monitoring their dynamic viscosity. Samples 1 - 10 are allowed to stand at room temperature for several weeks and the viscosity behavior is monitored.

The samples No. 1, 2, 5, 6, 9 and 10 remain below a dynamic viscosity value of 5 mPas for at least 10 weeks.

The samples No. 3, 4, 7 and 8 remained below a dynamic viscosity value of 5 mPas for at least 4 weeks.

It may be concluded that all samples 1 - 10 show acceptable or good storage stability for commercial purposes.

### Drainage tests

A furnish comprising 80 % kraft pulp fibers and 20 % ground calcium carbonate (GCC) filler, and having a consistency of 5 g/l is used for drainage tests. The fiber fraction comprises 7 parts of short fibers and 3 parts of long fibers, and has a freeness of approximately 34 °SR (Schopper Riegler). Drainage is tested with Mütek DFS 03 device. Following stirring profile is used: 30 s 500 rpm - 20 s 1000 rpm - 15 s 500 rpm - valve is opened.
- Retention aids:: 1) cationic polyacrylamide (c-PAM) in emulsion form (Retaminol PCE 305 L, Kemira), added after 20 s, and
2) Colloidal silica; added after 50 s
650 g of white water is collected during each trial and the corresponding drainage time is recorded.

The results of drainage tests are shown in Tables 4 and 5. Unmodified starting materials for examples 1 and 2 are used as comparative samples. The furnishes used in tests of Table 4 and Table 5 are prepared separately, so there may be minor, negligible deviations in their exact composition and freeness.

A shorter drainage time indicates more efficient drainage of the water from the wet furnish. Drainage time is clearly improved as a consequence of the treatment of the silica starting material with polyphosphoric acid according to Example 1 or with metaphosphoric acid/ sodium metaphosphate according to Example 2.

In a comparable way, modification with POCl₃ leads to improved properties as retention and drainage aid.

**Table 4. Drainage test results for samples 1 - 4 from Example 1**

| **c-PAM emulsion amount (g/t)** | **Silica sample** | **Silica amount (kg/t)** | **Drainage time (s)** |
|---|---|---|---|
| 0 | - | 0 | 62.7 |
| 1000 | Starting material for example 1 | 3 | 42.1 |
| 1000 | Sample 1 | 3 | 40.4 |
| 1000 | Sample 2 | 3 | 37.2 |
| 1000 | Sample 3 | 3 | 39.1 |
| 1000 | Sample 4 | 3 | 38.3 |
| 1500 | Starting material for example 1 | 4.4 | 29.4 |
| 1500 | Sample 1 | 4.4 | 28.1 |
| 1500 | Sample 2 | 4.4 | 27.0 |
| 1500 | Sample 3 | 4.4 | 27.4 |
| 1500 | Sample 4 | 4.4 | 26.5 |

**Table 5. Drainage test results for samples 5 - 8 from Example 2**

| **c-PAM amount (g/t)** | **Silica sample** | **Silica amount (kg/t)** | **Drainage time (s)** |
|---|---|---|---|
| 0 | - | 0 | 56.5 |
| 1000 | Starting material of example 2 | 3 | 28.7 |
| 1000 | Sample 5 | 3 | 27.1 |
| 1000 | Sample 6 | 3 | 26.5 |
| 1000 | Sample 7 | 3 | 27.0 |
| 1000 | Sample 8 | 3 | 26.1 |
| 1500 | Starting material of example 2 | 4.4 | 22.4 |
| 1500 | Sample 5 | 4.4 | 21.3 |
| 1500 | Sample 6 | 4.4 | 18.6 |
| 1500 | Sample 7 | 4.4 | 19.7 |
| 1500 | Sample 8 | 4.4 | 19.6 |

### Retention tests

A furnish comprising 80 % kraft fibers and 20 % ground calcium carbonate (GCC) filler, and having a consistency of 8.5 g/l is used. The DFS 03 testing device (Mütek GmbH, Germany) is equipped with an 18 mesh wire for the retention tests. The following stirring profile is used: 30 s 400 rpm - 20 s 650 rpm - 15 s 400 rpm - valve is opened, and 250 ml of filtrate is collected. In all trial runs, Retaminol PCE 305 L is added after 20 s with a dosage of 1000 g/t, and colloidal silica is added after 50 s with a dosage of 1.5 and 3.5 kg/t, respectively. The First Pass Retention is determined by collecting the solids in the filtrate on filter paper (Whatman, grade black ribbon) via filtration through a Büchner funnel, drying and weighing the obtained filter papers, and calculating the First Pass Retention.

Observed First Pass Retention:
1) Fennosil 515 (unmodified silica, comparative sample)

| | |
|---|---|
| 1.5 kg/t | 58.3% |
| 3.5 kg/t | 61.1% |

2) Sample 9

| | |
|---|---|
| 1.5 kg/t | 59.0% |
| 3.5 kg/t | 62.2% |

3) Sample 10

| | |
|---|---|
| 1.5 kg/t | 60.7% |
| 3.5 kg/t | 63.4% |

The efficiency of silica sol as retention aid is clearly improved as a result of the modification with metaphosphoric acid/sodium metaphosphate.

Even if the invention was described with reference to what at present seems to be the most practical and preferred embodiments, it is appreciated that the invention shall not be limited to the embodiments described above, but the invention is intended to cover also different modifications and equivalent technical solutions within the scope of the enclosed claims.

## Claims

1. Method of producing a silica-based sol comprising
- obtaining silica-based sol comprising silica particles, which sol has a specific surface area of less than 115 m²/g aqueous sol, and
- introducing phosphate groups on the surface of the silica particles by reacting the silica-based sol with a modifier under mixing, at reaction temperature 15 - 35 °C, whereby the modifier is used in amount of 0.4 - 3 weight-%, calculated to amount of silica SiO₂ in the sol, and the modifier is selected from the group comprising metaphosphoric acid, polyphosphoric acid, phosphoroxyhalogenides, a mixture of metaphosphoric acid (HPO₃)ₙ and alkali metaphosphate, (MPO₃)ₙ, or a mixture of metaphosphoric acid and polyphosphoric acid, or an alkali salt of polyphosphoric acid.

2. Method according to claim 1, **characterised in** using the modifier amount of 0.6 - 2.5 weight-%, calculated to amount of silica, SiO₂, in the sol.

3. Method according to any of claims 1 to 2, **characterised in** modifying a raw solution of silica-based sol having solids content < 6 weight-% by introducing phosphate groups on the surface of the silica particles, and subjecting the silica-based sol a concentration step, such as ultrafiltration, in order to increase the solids content of the sol to > 10 weight %.

4. Method according to any of preceding claims, **characterised in** adjusting the pH of the silica-based sol with a base to a desired level after introduction of phosphate groups on the surface of the silica particles.

5. Silica-based sol which
- is produced by using a method of any of claims 1 - 4,
- has a specific surface area of less than 115 m²/g aqueous sol, and
- comprises silica particles, which have an average particle size below 50 nm,
SiO₂ content of the silica based sol being at least 5 weight-% and phosphorous content at least 0.0055 weight-%

6. Silica-based sol according to claim 5, **characterised in that** the weight ratio of SiO₂/phosphorous in the sol is 80:1 - 900:1, preferably 95:1 - 600:1, more preferably 120:1 - 450:1.

7. Silica-based sol according to claim 5 or 6, **characterised in that** the phosphorous content of the silica based sol is at least 0.0083 weight-%, more preferably at least 0.011 weight-%.

8. Silica-based sol according to any of the claims 5 to 7, **characterised in that** it has a specific surface area of less than 105 m²/g aqueous sol.

9. Silica-based sol according to any of the preceding claims 5 - 8, **characterised in that** the silica-based sol has an S-value within the range of from 30 to 70 %, preferably within the range from 35 to 65 %, more preferably within the range from 40 to 60 %, determined by using method described by Iler & Dalton in J. Phys. Chem. 60(1956), 955 - 957.

10. Silica-based sol according to any of the preceding claims 5 - 9, **characterised in that** the SiO₂ content of the modified silica-based sol is in the range of 8 - 25 weight-%, preferably in the range of 10 - 18 weight-%, more preferably in the range of 12 - 16 weight-%.

11. Silica-based sol according to any of the preceding claims 5 - 10, **characterised in that** the dynamic viscosity of the silica-based sol is in the range of 2 - 5 m Pas (at 25 °C)

12. Use of silica-based sol according any of claims 5 - 11 as drainage and retention aid in papermaking industry.

13. Use according to claim 12, **characterised in that** the silica-based sol is used in amount of 0.2 - 6 kg to ton dry furnish.

## Patentansprüche

1. Verfahren zum Herstellen eines auf Siliciumdioxid basierenden Sols, welches umfasst
- Erhalten von auf Siliciumdioxid basierendem Sol, welches Siliciumdioxidpartikel umfasst, welches Sol eine spezifische Oberfläche von weniger als 115 m²/g wässeriges Sol hat, und
- Einführen von Phosphatgruppen an der Oberfläche der Siliciumdioxidpartikel durch Umsetzen des auf Siliciumdioxid basierenden Sols mit einem Modifikator unter Mischen bei Umsetzungstemperatur 15-35°C, wobei der Modifikator in einer Menge von 0,4-3 Gew.-% verwendet wird, berechnet auf der Menge an Siliciumdioxid SiO₂ in dem Sol, und der Modifikator ausgewählt ist aus der Gruppe, welche Metaphosphorsäure, Polyphosphorsäure, Phosphoroxyhalogenide, ein Gemisch aus Metaphosphorsäure (HPO₃)ₙ und Alkali-Metaphosphat, (MPO₃)ₙ oder ein Gemisch aus Metaphosphorsäure und Polyphosphorsäure oder ein Alkalisalz von Polyphosphorsäure umfasst.

2. Verfahren gemäß Anspruch 1, **gekennzeichnet durch** Verwenden der Modifikatormenge von 0,6-2,5 Gew.-%, berechnet auf der Menge an Siliciumdioxid, SiO₂, in dem Sol.

3. Verfahren gemäß einem der Ansprüche 1 bis 2, **gekennzeichnet durch** Modifizieren einer Rohlösung aus auf Siliciumdioxid basierendem Sol mit Feststoffgehalten <6 Gew.-% **durch** Einführen von Phosphatgruppen an der Oberfläche der Siliciumdioxidpartikel und Unterziehen des auf Siliciumdioxid basierenden Sols einem Konzentrationsschritt wie Ultrafiltration, um den Feststoffgehalt im Sol auf >10 Gew.-% zu erhöhen.

4. Verfahren gemäß einem der vorangehenden Ansprüche, **gekennzeichnet durch** Anpassen des pH des auf Siliciumdioxid basierenden Sols mit einer Base auf einen gewünschten Grad nach Einführung von Phosphatgruppen an der Oberfläche der Siliciumdioxidpartikel.

5. Auf Siliciumdioxid basierendes Sol, welches
- durch Verwenden eines Verfahrens nach einem der Ansprüche 1-4 hergestellt wird,
- eine spezifische Oberfläche von weniger als 115 m²/g wässeriges Sol hat und
- Siliciumdioxidpartikel mit einer durchschnittlichen Partikelgröße unter 50 nm umfasst,
wobei der SiO₂-Gehalt des auf Siliciumdioxid basierenden Sols mindestens 5 Gew.-% und der Phosphorgehalt mindestens 0,0055 Gew.-% ist.

6. Auf Siliciumdioxid basierendes Sol gemäß Anspruch 5, **dadurch gekennzeichnet, dass** das Gewichtsverhältnis von SiO₂/Phosphor im Sol 80:1 - 900:1, vorzugsweise 95:1 - 600:1, bevorzugter 120:1 - 450:1 ist.

7. Auf Siliciumdioxid basierendes Sol gemäß Anspruch 5 oder 6, **dadurch gekennzeichnet, dass** der Phosphorgehalt des auf Siliciumdioxid basierenden Sols mindestens 0,0083 Gew.-%, bevorzugter mindestens 0,011 Gew.-% beträgt.

8. Auf Siliciumdioxid basierendes Sol gemäß einem der Ansprüche 5 bis 7, **dadurch gekennzeichnet, dass** es eine spezifische Oberfläche von weniger als 105 m²/g wässeriges Sol hat.

9. Auf Siliciumdioxid basierendes Sol gemäß einem der vorangehenden Ansprüche 5-8, **dadurch gekennzeichnet, dass** das auf Siliciumdioxid basierende Sol einen S-Wert innerhalb der Bandbreite von 30 bis 70%, vorzugsweise innerhalb der Bandbreite von 35 bis 65%, bevorzugter innerhalb der Bandbreite von 40 bis 60% hat, bestimmt durch Verwenden des durch Iler & Dalton in J. Phys. Chem. 60 (1956), 955-957 beschriebenen Verfahrens.

10. Auf Siliciumdioxid basierendes Sol gemäß einem der vorangehenden Ansprüche 5-9, **dadurch gekennzeichnet, dass** der SiO₂-Gehalt des modifizierten auf Siliciumdioxid basierenden Sols im Bereich von 8-25 Gew.-%, vorzugsweise im Bereich von 10-18 Gew.-%, bevorzugter im Bereich von 12-16 Gew.-% ist.

11. Auf Siliciumdioxid basierendes Sol gemäß einem der vorangehenden Ansprüche 5-10, **dadurch gekennzeichnet, dass** die dynamische Viskosität des auf Siliciumdioxid basierenden Sols im Bereich von 2-5 mPas (bei 25°C) ist.

12. Verwendung von auf Siliciumdioxid basierendem Sol gemäß einem der Ansprüche 5-11 als Entwässerung und Retentionshilfe in der Papierherstellungsindustrie.

13. Verwendung gemäß Anspruch 12, **dadurch gekennzeichnet, dass** das auf Siliciumdioxid basierende Sol in einer Menge von 0,2-6 kg pro Tonne Trockenfaser verwendet wird.

## Revendications

1. Procédé de production d'un sol à base de silice comprenant
- l'obtention d'un sol à base de silice comprenant des particules de silice, lequel sol a une superficie spécifique de moins de 115 m²/g de sol aqueux, et
- l'introduction de groupes phosphate sur la surface des particules de silice par mise en réaction du sol à base de silice avec un modificateur sous mélange, à une température de réaction de 15 à 35 °C, par lequel le modificateur est utilisé dans une quantité de 0,4 à 3 % en poids, calculée par rapport à la quantité de silice SᵢO₂ dans le sol, et le modificateur est choisi dans le groupe comprenant l'acide métaphosphorique, l'acide polyphosphorique, les phosphoroxyhalogénures, un mélange d'acide métaphosphorique (HPO₃)ₙ et d'un métaphosphate alcalin (MPO₃)ₙ, ou un mélange d'acide métaphosphorique et d'acide polyphosphorique, ou un sel d'alcali d'acide polyphosphorique.

2. Procédé selon la revendication 1, **caractérisé par** l'utilisation de la quantité de modificateur de 0,6 à 2,5 % en poids, calculée par rapport à la quantité de silice, SᵢO₂, dans le sol.

3. Procédé selon l'une quelconque des revendications 1 à 2, **caractérisé par** la modification d'une solution brute de sol à base de silice ayant une teneur en matière sèche < 6 % en poids par l'introduction de groupes phosphate sur la surface de particules de silice, et la soumission du sol à base de silice à une étape de concentration, telle qu'une ultrafiltration, afin d'augmenter la teneur en matière sèche du sol à > 10 % en poids.

4. Procédé selon l'une quelconque des revendications précédentes, **caractérisé par** l'ajustement du pH du sol à base de silice avec une base à un niveau souhaité après introduction de groupes phosphate sur la surface des particules de silice.

5. Sol à base de silice qui
- est produit à l'aide d'un procédé de l'une quelconque des revendications 1 à 4,
- a une superficie spécifique de moins de 115 m²/g de sol aqueux, et
- comprend des particules de silice, qui ont une taille moyenne de particule en dessous de 50 nm,
la teneur en SᵢO₂ du sol à base de silice étant d'au moins 5 % en poids et la teneur en phosphore d'au moins 0,0055 % en poids.

6. Sol à base de silice selon la revendication 5, **caractérisé en ce que** le rapport en poids de SᵢO₂/phosphore dans le sol est de 80 : 1 à 900 : 1, de préférence de 95 : 1 à 600 : 1, de manière davantage préférée de 120 : 1 à 450 : 1.

7. Sol à base de silice selon la revendication 5 ou 6, **caractérisé en ce que** la teneur en phosphore du sol à base de silice est d'au moins 0,0083 % en poids, de manière davantage préférée d'au moins 0,011 % en poids.

8. Sol à base de silice selon l'une quelconque des revendications 5 à 7, **caractérisé en ce qu'**il a une superficie spécifique de moins de 105 m²/g de sol aqueux.

9. Sol à base de silice selon l'une quelconque des revendications 5 à 8 précédentes, **caractérisé en ce que** le sol à base de silice a une valeur S dans la plage de 30 à 70 %, de préférence dans la plage de 35 à 65 %, de manière davantage préférée dans la plage de 40 à 60 %, déterminée en utilisant un procédé décrit par Iler & Dalton dans J. Phys. Chem. 60 (1956), 955 à 957.

10. Sol à base de silice selon l'une quelconque des revendications 5 à 9 précédentes, **caractérisé en ce que** la teneur en SᵢO₂ du sol à base de silice modifié est dans la plage de 8 à 25 % en poids, de préférence dans la plage de 10 à 18 % en poids, de manière davantage préférée dans la plage de 12 à 16 % en poids.

11. Sol à base de silice selon l'une quelconque des revendications 5 à 10 précédentes, **caractérisé en ce que** la viscosité dynamique du sol à base de silice est dans la plage de 2 à 5 mPas (à 25°C).

12. Utilisation d'un sol à base de silice selon l'une quelconque des revendications 5 à 11, en tant que séquestrant et agent de rétention dans l'industrie papetière.

13. Utilisation selon la revendication 12, **caractérisée en ce que** le sol à base de silice est utilisé dans une quantité de 0,2 à 6 kg par tonne de composant de fabrication sèche.
